# EUROPEAN PATENT SPECIFICATION

(11) **EP 3 241 100 B1**
(45) Date of publication and mention of the grant of the patent: **30.01.2019**
(21) Application number: 15826122.2
(22) Date of filing: 31.12.2015
(51) Int. Cl.: G06F 3/0488, G06F 3/0482, G06F 3/048

(54) **METHOD AND APPARATUS FOR PROCESSING NOTIFICATIONS ON A MOBILE COMPUTING DEVICE**
VERFAHREN UND VORRICHTUNG ZUM VERARBEITEN VON MELDUNGEN AUF EINER MOBILEN DATENVERARBEITUNGSVORRICHTUNG
APPAREIL ET PROCÉDÉ DE TRAITEMENT DES NOTIFICATIONS SUR UN DISPOSITIF INFORMATIQUE MOBILE

(30) Priority: 04.01.2015 WO PCT/CN2015/070048; 29.01.2015 US 201514608808
(43) Date of publication of application: 08.11.2017
(73) Proprietor: Microsoft Technology Licensing, LLC, Redmond, Washington 98052-6399 (US)
(72) Inventor: QIAO, Wei, Redmond, Washington 98052-6399 (US); ZHUANG, Mingming, Redmond, Washington 98052-6399 (US); CHEN, Le, Redmond, Washington 98052-6399 (US); XUE, Chaomin, Redmond, Washington 98052-6399 (US)
(74) Representative: CMS Cameron McKenna Nabarro Olswang LLP
(86) International application number: PCT/US2015/068209
(87) International publication number: WO 2016/109760

(56) References cited:
- EP-A1- 2 219 105
- WO-A1-2014/019466
- US-A1- 2008 276 170
- US-A1- 2011 004 845
- US-A1- 2012 117 507
- US-A1- 2012 204 191
- US-A1- 2015 007 075

## Description

### FIELD OF THE INVENTION

Example embodiments of the present disclosure generally relate to notifications on a mobile computing device with a touch sensitive display. More particularly, example embodiments of the present disclosure relate to methods and apparatuses for processing notifications and further launching an application associated with the notification.

### BACKGROUND OF THE INVENTION

As the wireless communication technology keeps developing, more and more types of mobile computing devices supporting various wireless communication standards are emerging. With these mobile computing devices, users can read and send emails, receive or send text messages, receive or make phone calls, schedule appointments, or to perform other tasks. Regardless of whether a user is currently using the mobile computing device or not, it is crucial to notify the user of various events that occur.

To this end, many mobile computing devices are now providing a status bar on the display, in which a plurality of notifications or notification representations are presented. Each notification is individually generated by a corresponding application in response to an event occurrence. Some mobile computing devices also provide a notification list, in which a plurality of application icons together with corresponding application descriptions are shown. Once the application icon in the notification list is selected by the user via his finger or stylus, an application associated with the application icon will be launched and the corresponding event as notified by the notification in the status bar could be handled. After that, the notification associated with the application as issue will automatically disappear from the status bar.

US 2015/0007075 provides a technique to display status notification information in an electronic device. The device displays one or more status notification icons in a status notification region of a touch screen. When the device receives an input selecting a status notification icon, the device retrieves and displays notification information in a notification information display region of the touch screen.

### SUMMARY OF THE INVENTION

The invention provides a method for processing notifications on a mobile computing device with a touch sensitive display, along with an apparatus for processing notifications on a mobile computing device with a touch sensitive display, as claimed hereinafter.

The aspects and example embodiments of the present disclosure as described herein may be utilized separately or in combination and different combining forms may be constituted to achieve some advantages of the present disclosure as mentioned in the following.

First, since the notification, which is intentionally and desirably selected by the user among a plurality of the notifications, is put on the top of the notification list, it would be easier for the user to select the desired application icon associated with the selected notification and thereby launch the desired application. Second, based on the bottom bar which could be used to launch the application when locating below the associated application icon, the user may be able to access to the application more quickly than the usual. In addition, according to the one or more embodiments of the present disclosure, the selection of the notification and the launching of the application associated with the selected notification could be done by a single swipe without multiple touches or clicks on the touch sensitive display or screen, thereby giving the user experience a big boost. The invention will be carried out according to the appended independent claims.

### BRIEF DESCRIPTION OF THE DRAWINGS

The embodiments of the present disclosure that are presented in the sense of examples and their advantages are explained in greater detail below with reference to the accompanying drawings, in which:
Fig. 1 is a flow diagram of an example method for processing notifications on a mobile computing device with a touch sensitive display according to one or more embodiments of the present disclosure;
Fig. 2 is a flow diagram of an example method for launching an application on a mobile computing device with a touch sensitive display according to one or more embodiments of the present disclosure;
Figs. 3A-3D illustrate a series of consecutive actions that are performed on the sensitive touch screen to locate a desired application and launch it according to one or more embodiments of the present disclosure;
Figs. 4A-4C illustrate a series of consecutive actions that are performed on the sensitive touch screen for launching an application according to one or more embodiments of the present disclosure; and
Fig. 5 is a schematic diagram of an apparatus according to one or more embodiments of the present disclosure.

Like reference numbers and designations in the various drawings indicate like elements.

### DETAILED DESCRIPTION OF EMBODIMENTS

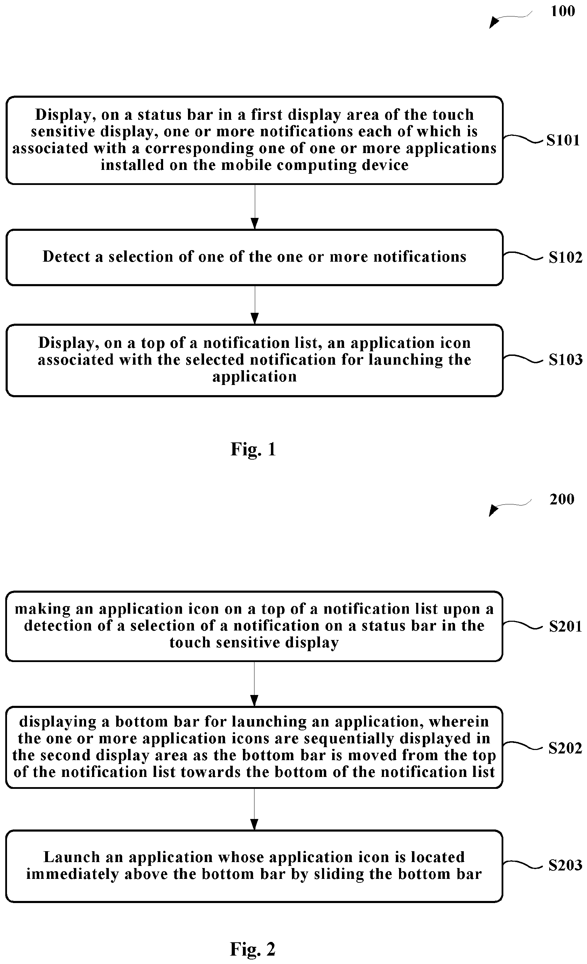

Fig. 1 is a flow diagram of an example method 100 for processing notifications on a mobile computing device with a touch sensitive display according to one or more embodiments of the present disclosure. As illustrated in Fig. 1, the method 100 begins with block S101, at which the method 100 displays, on a status bar in a first display area of the touch sensitive display, one or more notifications each of which is associated with a corresponding one of one or more applications installed on the mobile computing device. The notification herein may be referred to as a notification representation, which is often graphically represented as a shortcut key icon of a corresponding application.

As is known to those skilled in the art, the touch sensitive display herein may have a touch-sensitive surface, sensor or set of sensors that accepts input from the user based on haptic and/or tactile contact. The touch sensitive display and a potential display controller, along with any associated modules and/or sets of computing instructions in memory may detect contact, for example, any movement or breaking of the contact on the touch-sensitive surface and convert the detected contact into interaction with user interface objects, for example, one or more soft keys, application icons, web pages or images, that are displayed on the touch screen. Generally, a contact point between the touch screen display and the user corresponds to a finger or a stylus of the user.

At block S102, the method 100 detects a selection of one of the one or more notifications. The selection herein may be implemented by a user via his or her finger. Therefore, the detection herein may be a detection of a finger contact on one item on the status list. Alternatively, the selection herein may be implemented using a stylus, which is removable and generally inserted inside the housing of the mobile computing device on one side.

Upon detecting the selection of the notification, the method proceeds to block S103, at which the method 100 displays, on a top of a notification list, an application icon associated with the selected notification for launching the application. In one or more embodiments, the notification list herein may include a list of items, for example, a list of software application icons, such as a picture application icon, a video application icon, a text messaging application icon, a multiple media messaging application icon, a music application icon, a news application icon, a health application icon, a measurement application icon, a navigation application icon, a calendar application icon and a reminder application icon, or a combination thereof. In other words, the notification list herein may include one or more application icons each of which is associated with a corresponding one of the one or more applications.

In one or more embodiments, the notification list includes one or more additional items, each of which is displayed adjacent to a corresponding application icon and gives a brief description regarding the application associated with the corresponding application icon. The brief description may be different on an application-by-application basis. For example, with respect to the text messaging application, the brief description may include a received time, its sender and possibly a beginning or initial part of the message. With respect to the news application, the brief description may include a summary, a headline or an abstract of the news.

In one or more embodiments, the remaining items after the first item in the notification list may be remain the same order as it was. Additionally or alternatively, the remaining items, i.e., the application icons, may also be re-ranked in chronological order, i.e., according to the times at which the notifications are generated.

Since the application icon associated with the selected notification at block S102 is ranked at the first place in the notification list, it would be easy for the user to see and select or touch the application icon so as to launch the desired application, thereby saving the time for launching the application and improving the user experience.

In one or more embodiments, the method 100 may further display a bottom bar for launching an application, wherein the one or more application icons are sequentially displayed in the second display area as the bottom bar is moved from the top of the notification list towards the bottom of the notification list. Then, the method 100 may also launch an application whose application icon is located immediately above the bottom bar by sliding the bottom bar.

It is to be understood that the notification list may disappear or be invisible at the beginning, for example, prior to the notification being touched or selected by the user. Then, when the notification is selected or touched, the notification list may be enabled immediately and its items may be progressively or sequentially visible to the user as the bottom bar moves from the top of the notification list to the bottom of the notification list. Different from the conventional scroll bar, the bottom bar in one or more embodiments of the present disclosure may be used to trigger the launching of the application. In particular, when the bottom bar is moved by the user to locate immediately below a desirable application, sliding the bottom bar would trigger the launching of the particular favorite application instead of directly touching the application icon to trigger the launch. This could achieve better user experience since the user does not need to release the bottom bar first and then select the application icon to do the launch as commonly used in the existing technique.

In one or more embodiments, the selection of the notification and the launching of the application may be performed consecutively by a single swipe on the touch sensitive display through the finger or the stylus of the user. In other words, the user may be able to locate the desired application and then launch it by a single swipe from the display area of the status bar to the display area of the notification list without any other additional touches or contacts. The single swipe herein may be a movement of the finger or stylus from a location of the status bar to the location of the desired application icon and then from left to right or from right to left, which may be configured according to the user's preference, without breaking off the contact. In some embodiment, the bottom bar could be graphically emphasized such that it would be readily distinguishable from the application icons.

With the method 100 and its various extensions as discussed in the one or more embodiments, the user may easily select the favorite application and launch it in a single swipe without any further finger or stylus contact, thereby obtaining great user experience.

Fig. 2 is a flow diagram of an example method 200 for launching an application on a mobile computing device with a touch sensitive display according to one or more embodiments of the present disclosure. As illustrated in Fig. 2, the method 200 begins with block S201, at which the method 200 makes an application icon on a top of a notification list upon a detection of a selection of a notification on a status bar in the touch sensitive display. The notification and the application icon herein are associated with a same application installed on the mobile computing device, and the notification list includes one or more application icon each of which is associated with a corresponding application and the status bar includes one or more notifications.

Then, at block S202, the method 200 displays a bottom bar for launching an application, wherein the one or more application icons are sequentially displayed in the second display area as the bottom bar is moved from the top of the notification list towards the bottom of the notification list.

After that, at block S203, the method 200 launches an application whose application icon is located immediately above the bottom bar by sliding the bottom bar.

In one or more embodiments, the selection of the notification and the launching of the application are consecutively performed by a single swipe.

In one or more embodiments, the selection of the notification and the launching of the application are performed by a finger or stylus of a user.

In one or more embodiments, the status bar is displayed in a first display area of the touch sensitive display and the notification list is displayed in a second display area of the touch sensitive display, and the bottom bar is automatically displayed upon detecting that a display area between the first display area and the second display area is touched.

In one or more embodiments, the notification list includes one or more additional items, each of which is displayed adjacent to a corresponding application icon and gives a brief description regarding the application associated with the corresponding application icon.

In one or more embodiments, the one or more applications respectively associated with the one or more application icons included in the notification list at least include one or more of a picture application, a video application, a text messaging application, a multiple media messaging application, a music application, a news application, a health application, a measurement application, a navigation application, a calendar application, a reminder application and a combination thereof.

From the foregoing descriptions, it is to be understood by those skilled in the art that the technical meanings of the notification, the status bar, the notification list, and the bottom bar in the method 200 and its various extensions in the one or more embodiments are identical to those as discussed with reference to Fig. 1, the pertinent details may be equally applied herein.

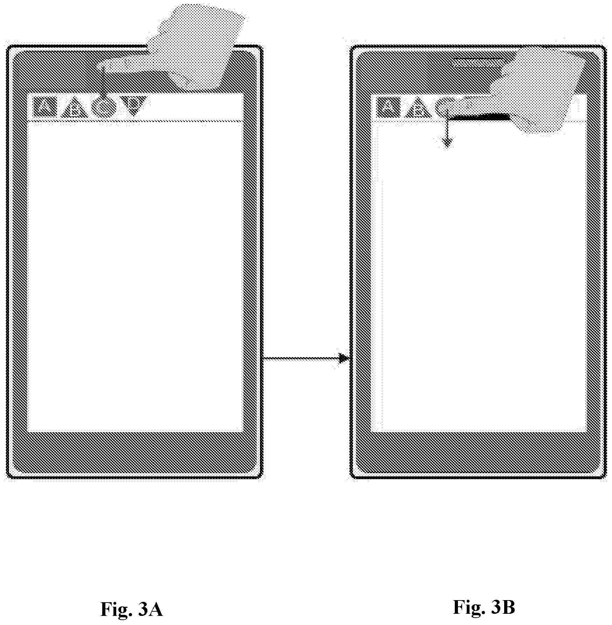

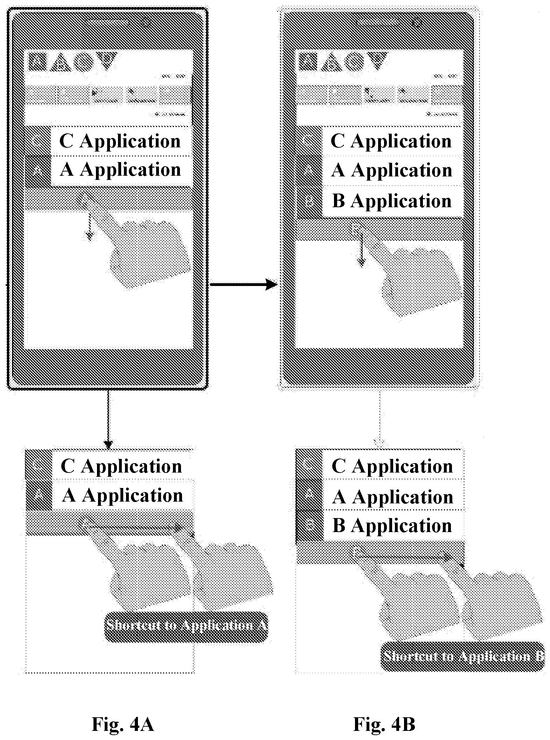

To a better understanding of the solutions in the present disclosure, the following will discuss the actions performed by the user with reference to Figs. 3A-3D and 4A-4C in conjunction with the example user graphic interfaces.

Figs. 3A-3D illustrate a series of consecutive actions that are performed on the sensitive touch screen to locate a desired application and launch it according to one or more embodiments of the present disclosure.

As shown in Fig. 3A, there is depicted a status bar, which exemplarily includes notifications or notification representations A, B, C and D, each of which may have a unique icon, such as a square, a triangle, a circle and an invented triangle, as shown. Further shown is a finger of a user who is viewing the status bar and about to touch the notification C as his or her favorite one.

The actions continue to Fig. 3B, the finger as shown is touching the notification C and is about to keep moving downward to the notification list, which may be set below the status list and initially invisible to the user.

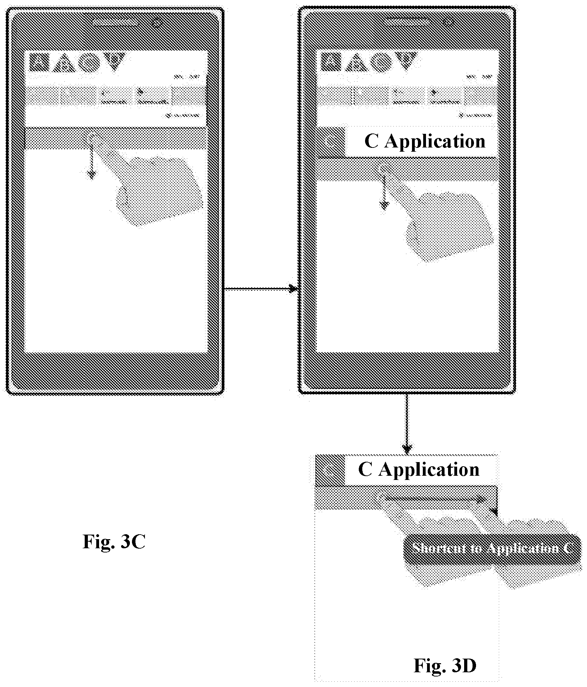

Turning to Fig. 3C, as the finger keeps moving downward, the notification list is progressively displayed and the application icon C, which is previously supposed to be ranked at the third place according to the ranking of the status list, is now placed at the first place in the notification list due to the user selection. In this manner, the favorite application icon C is first presented to the user for further potential launch.

Then, as shown in Fig. 3D, when the bottom bar as held by the finger moves passes the application icon C and the application icon C or a row including the application C is completely presented to the user, the bottom bar is just immediately below the application icon C. At this moment, as shown by the lower part of the Fig. 3D, the user who would like to launch the application C may slide the bottom bar to the right, which may be considered as a shortcut to the application C. Upon detecting this sliding, the application C installed on the mobile computing device would be launched right away and the interface for processing the notification associated with the application C would be rendered to the user, which is not further shown for a simplifying purpose.

From the above discussion made with reference to Figs. 3A-3D, it is to be understood that the launching of the favorite application according to one or more embodiments of the present disclosure could be done at one go without any interruption. Thereby, it could improve the efficiency of launching the applications on the mobile computing device.

Figs. 4A-4C illustrate a series of consecutive actions that are performed on the sensitive touch screen for launching an application according to one or more embodiments of the present disclosure. More particularly, Figs. 4A-4C illustrate various scenarios when the first presented application is not launched.

As shown in Fig. 4A, the user may not launch the application C even though he or she has selected the notification C associated with the application C for some reasons, for example, he may lose interest in launching the application C after reading the brief description regarding the notification. In this case, the user may continue to move the bottom bar downward until the application icon A is fully presented or displayed in the touch sensitive screen. Then, as illustrated in the lower part of Fig. 4A, the user may slide the bottom bar to the right if he or she would like to launce the application A, for example, if the brief description manifests some degrees of importance or relevance to the user.

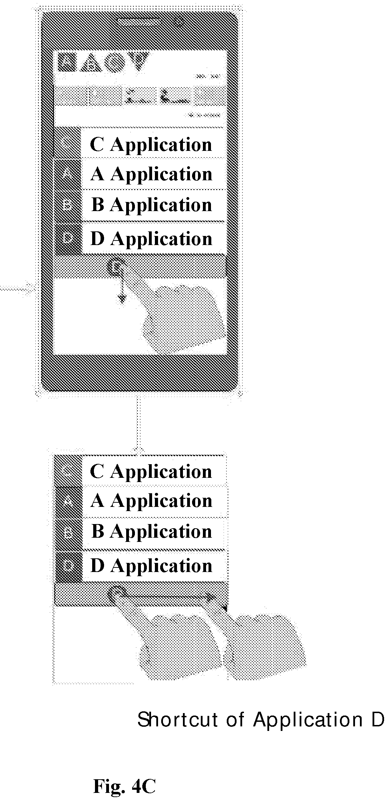

Likewise, as shown in Figs. 4B and 4C, the user may freely select to launch the application B or D by sliding the bottom bar to the right when the application icon B or D is completely displayed and the bottom bar is exactly below the application icon B or D.

It should be understood that the user interfaces and the corresponding operations applied thereon as depicted in Figs. 3A-3D and Figs. 4A-4C are merely for an illustrative purpose. A person skilled in the art, based on the teaching of the present application, is able to make any suitable amendments or modifications to the user interfaces and therefore adding additional operations to launch the application or view specific application items, for example, the specific emails or messages.

For example, in some embodiments, there may be a number of emails (e.g., 10) under the email "notification," which could be specifically indicated by adding a digit 10 with a red color on the email notification. Upon user selection of the email notification, instead of displaying a single email application icon, for example, an icon of the Exchange, ten email icons each of which corresponds to an email would be listed in the notification list in an order, for example, times when the emails entering into the inbox. According to the user preferences or settings, a direct click of the email item or a slide of the bottom bar immediately below the email item may trigger a full display of the email content or open the inbox so that the user may read and reply the email in the email application. Once the finger of the user reaches the end of ten emails, as discussed before, the second application icon may be progressively displayed and immediately above the bottom bar as the bottom bar keeps moving downwards.

In some other embodiments, a user is able to select to display the application items in the notification list, for example, by sliding the bottom bar to the left to explode the items as a list. Further, the user may select to either launch the email application or an application item by sliding the bottom bar to the right.

Based on the above exemplary embodiments, it is to be understood that the term "application icon" throughout the present disclosure does not merely refer to or cover the icon which is directly associated with the application, e.g., a main program, but also is intended to refer to the icon associated with the application item, i.e., an application item icon as discussed above. Likewise, the launching of an application according to the present disclosure may also include or cover the case of opening an application item. Hence, the items as shown in the notification list according to the present disclosure may include one or more icons, for example, one or more application icons, one or more application item icons or a combination thereof and the movement of the finger or stylus on the notification list and the sliding of the bottom bar at an appropriate position may trigger launching or opening of an application or an application item.

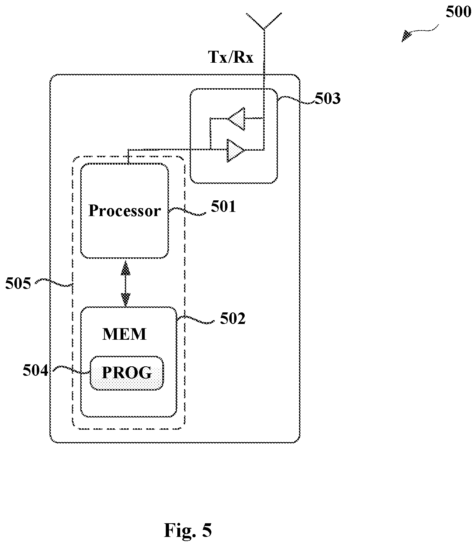

Fig. 5 is a schematic diagram of an apparatus 500 according to one or more embodiments of the present disclosure.

As illustrated in Fig. 5, the apparatus 500 includes at least one processor 501, such as a data processor, at least one memory (MEM) 502 coupled to the processor 501, and a suitable RF transmitter TX and receiver RX 503 coupled to the processor 501. The MEM 502 stores a program (PROG) 504. The TX/RX 503 is for bidirectional wireless communications.

The PROG 504 is assumed to include instructions that, when executed by the processor 501, enable the apparatus 500 to operate in accordance with the example embodiments of the present disclosure, as discussed herein with the methods 100, 200, and the operation flows as shown in Figs. 3A-3D and 4A-4C. For example, the apparatus 500 may be embodied as a mobile computing device, or a part thereof, to carry out the corresponding steps directed thereto as discussed in the methods 100 and 200.

In general, the example embodiments of the present disclosure may be implemented by computer software executable by at least one processor 501 of the apparatus 500, or by hardware, or by a combination of software and hardware.

The MEM 502 may be of any type suitable to the local technical environment and may be implemented using any suitable data storage technology, such as semiconductor based memory devices, magnetic memory devices and systems, optical memory devices and systems, fixed memory and removable memory, as non-limiting examples. While only one MEM is shown in the apparatus 500, there may be several physically distinct memory units in the apparatus 500. The processor 501 may be of any type suitable to the local technical environment, and may include one or more of general purpose computers, special purpose computers, microprocessors, digital signal processors (DSPs) and processors based on multicore processor architecture, as non-limiting examples. The apparatus 500 may have multiple processors, such as for example an application specific integrated circuit chip that is slaved in time to a clock which synchronizes the main processor.

In addition, the at least one processor 501 and the memory 502 may be combined as processing means 505 operative to perform the relevant steps as illustrated in the methods 100 and 200 with respect to the apparatus 500.

The techniques described herein may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

## Claims

1. A method (100) for processing notifications on a mobile computing device with a touch sensitive display, comprising:
displaying (S101), on a status bar in a first display area of the touch sensitive display, one or more notifications each of which is associated with a corresponding one of one or more applications installed on the mobile computing device;
detecting (S102) a selection through a touch of one of the one or more notifications; and
displaying (S103), on a top of a notification list, an application icon associated with the selected notification for launching the application, wherein the notification list is displayed in a second display area of the touch sensitive display and includes one or more application icons each of which is associated with a corresponding one of the one or more applications; the method being **characterized by**
displaying (S202) a bottom bar for launching an application, wherein the one or more application icons are sequentially displayed in the second display area as the bottom bar is moved with the touch from the top of the notification list towards the bottom of the notification list; and
launching (S203) an application whose application icon is located immediately above the bottom bar by sliding the touch on the bottom bar from left to right or right to left,
wherein the selection of the notification and the launching of the application are performed consecutively by a single swipe on the touch sensitive display through the touch of a finger or stylus of a user.

2. The method according to Claim 1, wherein the notification list includes one or more additional items, each of which is displayed adjacent to a corresponding application icon and gives a brief description regarding the application associated with the corresponding application icon.

3. The method according to Claim 1 or 2, wherein the one or more applications respectively associated with the one or more application icons included in the notification list at least include one or more of a picture application, a video application, a text messaging application, a multiple media messaging application, a music application, a news application, a health application, a measurement application, a navigation application, a calendar application and a reminder application.

4. An apparatus (500) for processing notifications on a mobile computing device with a touch sensitive display, comprising:
at least one processor (501); and
at least one memory (502) to store computer program instructions (504), the at least one processor comprising means to:
display, on a status bar in a first display area of the touch sensitive display, one or more notifications each of which is associated with a corresponding one of one or more applications installed on the mobile computing device;
detect a selection through a touch of one of the one or more notifications; and
display, on a top of a notification list, an application icon associated with the selected notification, wherein the notification list is displayed in a second display area of the touch sensitive display and includes one or more application icons each of which is associated with a corresponding one of the one or more applications; **characterized in that** the at least one processor, further comprising means to:
display a bottom bar for launching an application, wherein the one or more application icons are sequentially displayed in the second display area as the bottom bar is moved with the touch from the top of the notification list towards the bottom of the notification list; and
launch an application whose application icon is located immediately above the bottom bar by sliding from left to right or right to left the bottom bar,
wherein the selection of the notification and the launching of the application are performed consecutively by a single swipe on the touch sensitive display through the touch of a finger or stylus of a user.

5. The apparatus according to Claim 4, wherein the notification list includes one or more additional items, each of which is displayed adjacent to a corresponding application icon and gives a brief description regarding the application associated with the corresponding application icon.

6. The apparatus according to Claim 5, wherein the one or more applications respectively associated with the one or more application icons included in the notification list at least include one or more of a picture application, a video application, a text messaging application, a multiple media messaging application, a music application, a news application, a health application, a measurement application, a navigation application, a calendar application and a reminder application.

## Patentansprüche

1. Verfahren (100) zum Verarbeiten von Benachrichtigungen auf einer mobilen Computervorrichtung mit berührungsempfindlicher Anzeige, umfassend:
Anzeigen (S101) einer oder mehrerer Benachrichtigungen, wobei jede davon mit entsprechenden einen oder mehreren auf der mobilen Computervorrichtung installierten Applikationen verknüpft ist, auf einer Statusleiste in einem ersten Anzeigebereich der berührungsempfindlichen Anzeige;
Erkennen (S102) einer Auswahl durch eine Berührung einer der einen oder mehreren Benachrichtigungen; und
Anzeigen (S103) eines mit der ausgewählten Benachrichtigung verknüpften Applikationssymbols an einem oberen Ende einer Benachrichtigungsliste zum Aufrufen der Applikation, wobei die Benachrichtigungsliste in einem zweiten Anzeigebereich der berührungsempfindlichen Anzeige angezeigt ist und ein oder mehrere Applikationssymbole beinhaltet, die jeweils mit einer entsprechenden der einen oder mehreren Applikationen verknüpft sind; wobei das Verfahren **gekennzeichnet ist durch**
Anzeigen (S202) einer unteren Leiste zum Aufrufen einer Applikation, wobei das eine oder die mehreren Applikationssymbole nacheinander in dem zweiten Anzeigebereich angezeigt werden, während die untere Leiste durch die Berührung vom oberen Ende der Benachrichtigungsliste zum unteren Ende der Benachrichtigungsliste bewegt wird; und
Aufrufen (S203) einer Applikation, deren Applikationssymbol sich unmittelbar über der unteren Leiste befindet, durch Verschieben der Berührung von links nach rechts oder von rechts nach links auf der unteren Leiste,
wobei die Auswahl der Benachrichtigung und das Aufrufen der Applikation nacheinander durch ein einfaches Wischen der berührungsempfindlichen Anzeige durch Berührung mit einem Finger oder Stift eines Benutzers durchgeführt wird.

2. Verfahren nach Anspruch 1, wobei die Benachrichtigungsliste ein oder mehrere zusätzliche Elemente beinhaltet, die jeweils neben einem entsprechenden Applikationssymbol angezeigt werden und die eine kurze Beschreibung betreffend die mit dem entsprechenden Applikationssymbol verknüpfte Applikation vermitteln.

3. Verfahren nach Anspruch 1 oder 2, wobei die eine oder mehreren Applikationen, die jeweils mit dem einen oder den mehreren in der Benachrichtigungsliste beinhalteten Applikationssymbolen verknüpft sind, mindestens eine oder mehrere einer Bildapplikation, eine Videoapplikation, einer Textnachrichtenapplikation, einer Multi-Media-Nachrichtenapplikation, einer Musikapplikation, einer Nachrichtenapplikation, einer Gesundheitsapplikation, einer Messapplikation, einer Navigationsapplikation, einer Kalenderapplikation und eine Erinnerungsapplikation beinhalten.

4. Vorrichtung (500) zum Verarbeiten von Benachrichtigungen auf einer mobilen Computervorrichtung mit berührungsempfindlicher Anzeige, umfassend:
mindestens einen Prozessor (501); und
mindestens einen Speicher (502) zum Speichern von Computerprogrammbefehlen (504),
wobei der mindestens eine Prozesse Mittel umfasst zum:
Anzeigen einer oder mehrerer Benachrichtigungen, wobei jede davon mit entsprechenden einen oder mehreren auf der mobilen Computervorrichtung installierten Applikationen verknüpft ist, auf einer Statusleiste in einem ersten Anzeigebereich der berührungsempfindlichen Anzeige;
Erkennen einer Auswahl durch eine Berührung einer der einen oder mehreren Benachrichtigungen; und
Anzeigen eines mit der ausgewählten Benachrichtigung verknüpften Applikationssymbols an einem oberen Ende einer Benachrichtigungsliste, wobei die Benachrichtigungsliste in einem zweiten Anzeigebereich der berührungsempfindlichen Anzeige angezeigt ist und ein oder mehrere Applikationssymbole beinhaltet, die jeweils mit einer entsprechenden der einen oder mehreren Applikationen verknüpft sind; **dadurch gekennzeichnet, dass** der mindestens eine Prozessor weiterhin Mittel umfasst zum:
Anzeigen einer unteren Leiste zum Aufrufen einer Applikation, wobei das eine oder die mehreren Applikationssymbole nacheinander in dem zweiten Anzeigebereich angezeigt werden, während die untere Leiste durch die Berührung vom oberen Ende der Benachrichtigungsliste zum unteren Ende der Benachrichtigungsliste bewegt wird; und
Aufrufen einer Applikation, deren Applikationssymbol sich unmittelbar über der unteren Leiste befindet, durch Verschieben von links nach rechts oder von rechts nach links der unteren Leiste,
wobei die Auswahl der Benachrichtigung und das Aufrufen der Applikation nacheinander durch ein einfaches Wischen der berührungsempfindlichen Anzeige durch Berührung mit einem Finger oder Stift eines Benutzers durchgeführt wird.

5. Vorrichtung nach Anspruch 4, wobei die Benachrichtigungsliste ein oder mehrere zusätzliche Elemente aufweist, die jeweils neben einem entsprechenden Applikationssymbol angezeigt werden und die eine kurze Beschreibung betreffend die mit dem entsprechenden Applikationssymbol verknüpfte Applikation vermitteln.

6. Vorrichtung nach Anspruch 5, wobei die eine oder mehreren Applikationen, die jeweils mit dem einen oder den mehreren in der Benachrichtigungsliste beinhalteten Applikationssymbolen verknüpft sind, mindestens eine oder mehrere einer Bildapplikation, eine Videoapplikation, einer Textnachrichtenapplikation, einer Multi-Media-Nachrichtenapplikation, einer Musikapplikation, einer Nachrichtenapplikation, einer Gesundheitsapplikation, einer Messapplikation, einer Navigationsapplikation, einer Kalenderapplikation und eine Erinnerungsapplikation beinhalten.

## Revendications

1. Procédé (100) de traitement de notifications sur un dispositif informatique mobile à écran tactile, comprenant :
afficher (S101), sur une barre d'état dans une première zone d'affichage de l'écran tactile, une ou plusieurs notifications, chacune étant associée à une application correspondante parmi une ou plusieurs applications installées sur le dispositif informatique mobile ;
détecter (S102) une sélection par un touché d'une ou plusieurs notifications ; et
afficher (S103), en haut d'une liste de notifications, une icône d'application associée à la notification sélectionnée pour lancer l'application, dans lequel la liste de notifications est affichée dans une seconde zone d'affichage de l'écran tactile et inclut une ou plusieurs icônes d'application, chacune d'entre elles étant associée à une ou plusieurs applications correspondantes ; le procédé étant **caractérisé par**
afficher (S202) une barre inférieure pour lancer une application, la ou les icônes d'application étant affichées de manière séquentielle dans la seconde zone d'affichage lorsque la barre inférieure est déplacée via le toucher du haut de la liste de notifications vers le bas de la liste de notifications ; et
lancer (S203) une application dont l'icône d'application est située immédiatement au-dessus de la barre inférieure en faisant glisser le toucher de la barre inférieure de gauche à droite ou de droite à gauche,
dans lequel la sélection de la notification et le lancement de l'application sont effectués de manière consécutive par un seul balayage sur l'écran tactile via le toucher du doigt ou du stylet d'un utilisateur.

2. Procédé selon la revendication 1, dans lequel la liste de notifications inclut un ou plusieurs éléments supplémentaires, chacun d'eux étant affiché en regard d'une icône d'application correspondante et fournit une brève description de l'application associée à l'icône d'application correspondante.

3. Procédé selon la revendication 1 ou 2, dans lequel la ou les applications associées respectivement à la ou aux icônes d'application incluses dans la liste de notifications incluent au moins une ou plusieurs applications parmi une application d'image, une application vidéo, une application de messagerie textuelle, une application de messagerie multimédia, une application musicale, une application de presse, une application de santé, une application de mesure, une application de navigation, une application de calendrier et une application de rappel.

4. Appareil (500) pour traiter des notifications sur un dispositif informatique mobile à écran tactile, comprenant :
au moins un processeur (501) ; et
au moins une mémoire (502) pour enregistrer des instructions de programme d'ordinateur (504),
l'au moins un processeur comprenant des moyens pour
afficher, sur une barre d'état dans une première zone d'affichage de l'écran tactile, une ou plusieurs notifications, chacune étant associée à une application correspondante parmi une ou plusieurs applications installées sur le dispositif informatique mobile ;
détecter une sélection via le toucher de l'une des une ou plusieurs notifications ; et
afficher, en haut d'une liste de notifications, une icône d'application associée à la notification sélectionnée, la liste de notification étant affichée dans une seconde zone d'affichage de l'écran tactile et incluant une ou plusieurs icônes d'application, chacune d'elles étant associée à une application correspondante des différentes applications ; **caractérisé en ce que** l'au moins un processeur, comprenant en outre des moyens pour :
afficher une barre inférieure pour lancer une application, la ou les icônes d'application étant affichées de manière séquentielle dans la seconde zone d'affichage lorsque la barre inférieure est déplacée via le toucher du haut de la liste de notifications vers le bas de la liste de notifications ; et
lancer une application dont l'icône d'application est située immédiatement au-dessus de la barre inférieure en faisant glisser de gauche à droite ou de droite à gauche la barre inférieure,
dans lequel la sélection de la notification et le lancement de l'application sont effectués de manière consécutive par un seul balayage sur l'écran tactile par le toucher du doigt ou du stylet d'un utilisateur.

5. Appareil selon la revendication 4, dans lequel la liste de notifications inclut un ou plusieurs éléments supplémentaires, chacun d'eux étant affiché en regard d'une icône d'application correspondante et fournit une brève description de l'application associée à l'icône d'application correspondante.

6. Appareil selon la revendication 5, dans lequel la ou les applications associées respectivement à la ou aux icônes d'application incluses dans la liste de notifications incluent au moins une ou plusieurs applications parmi une application d'image, une application vidéo, une application de messagerie textuelle, une application de messagerie multimédia, une application musicale, une application de presse, une application de santé, une application de mesure, une application de navigation, une application de calendrier et une application de rappel.
